# EUROPÄISCHE PATENTANMELDUNG

(11) **EP 3 502 492 A1**
(43) Veröffentlichungstag der Anmeldung: **26.06.2019**
(21) Anmeldenummer: 17208708.2
(22) Anmeldetag: 20.12.2017
(51) Int. Cl.: F16B 35/06, F16B 39/282

(54) **BEFESTIGUNGSVORRICHTUNG**

(71) Anmelder: HILTI Aktiengesellschaft, 9494 Schaan (LI)
(72) Erfinder: Stuertzel, Christoph, 88138 Weißensberg (DE); Huang, Kun-Hao, 9422 Staad (CH)
(74) Vertreter: Hilti Aktiengesellschaft Corporate Intellectual Property

(57) **Zusammenfassung**

Vorrichtung zur Befestigung eines ersten Gegenstandes (501) an einem zweiten Gegenstand (501), mit einem Kopf (20), wobei der Kopf ein Widerlager (30) für eine Abstützung des ersten Gegenstandes aufweist, einem länglichen Schaft (40), wobei der Schaft in seiner Längsrichtung eine Achse definiert, und wobei das Widerlager eine Formkante (70) zum Einformen in den ersten Gegenstand aufweist.

## Beschreibung

### Technisches Gebiet

Die Erfindung betrifft eine Vorrichtung zur Befestigung eines ersten Gegenstandes an einem zweiten Gegenstand.

### Stand der Technik

Derartige Befestigungsvorrichtungen weisen häufig einen Kopf mit einem Widerlager und einen länglichen Schaft auf. Der Schaft dient dazu, in den ersten und/oder zweiten Gegenstand so weit einzudringen, bis das Widerlager an dem ersten Gegenstand anliegt und den ersten Gegenstand gegen den zweiten Gegenstand abstützt. Wenn grosse Kräfte an dem ersten Gegenstand wirken, besteht grundsätzlich die Gefahr, dass die Befestigungsvorrichtung versagt.

### Darstellung der Erfindung

Aufgabe der Erfindung ist es, eine Befestigungsvorrichtung zur Verfügung zu stellen, bei der die oben genannte Gefahr reduziert wird.

Die Aufgabe wird gelöst durch eine Vorrichtung zur Befestigung eines ersten Gegenstandes an einem zweiten Gegenstand, mit einem Kopf, wobei der Kopf ein Widerlager für eine Abstützung des ersten Gegenstandes aufweist, einem Schaft, wobei der Schaft eine Achse definiert, und wobei das Widerlager eine Formkante zum Einformen, bevorzugt Einfurchen oder Einschneiden, in den ersten Gegenstand aufweist. Durch das Einformen der Formkante in den ersten Gegenstand werden Bewegungen des ersten Gegenstands quer zur Achse relativ zu der Vorrichtung und damit auch relativ zum zweiten Gegenstand erschwert. Durch die damit verbundene Reduktion von mechanischen Belastungen der Vorrichtung wird deren Belastbarkeit erhöht. Bevorzugt ist der Schaft länglich ausgebildet, wobei seine Längsrichtung die Achse definiert.

Eine vorteilhafte Ausführungsform ist dadurch gekennzeichnet, dass das Widerlager den übrigen Kopf senkrecht zur Achse überragt, bevorzugt tellerförmig überragt. Bevorzugt ist das Widerlager als in den Kopf integrierte Beilagscheibe ausgebildet.

Eine vorteilhafte Ausführungsform ist dadurch gekennzeichnet, dass das Widerlager eine senkrecht zur Achse angeordnete Anlagefläche für eine Anlage an den ersten Gegenstand aufweist, von welcher die Formkante in Richtung der Achse abragt.

Eine vorteilhafte Ausführungsform ist dadurch gekennzeichnet, dass sich die Formkante um die Achse herum erstreckt. Bevorzugt ist die Formkante ringförmig um die Achse ausgebildet. Besonders bevorzugt ist die Formkante kreisringförmig um die Achse ausgebildet ist.

Eine vorteilhafte Ausführungsform ist dadurch gekennzeichnet, dass das Widerlager mehrere Formkanten, bevorzugt zwei, drei, vier oder fünf Formkanten aufweist. Bevorzugt bilden die Formkanten einen unterbrochenen Ring um die Achse. Ebenfalls bevorzugt bilden die Formkanten mehrere Ringe um die Achse.

Eine vorteilhafte Ausführungsform ist dadurch gekennzeichnet, dass die Formkante ein Metall und/oder eine Legierung umfasst. Bevorzugt besteht die Formkante aus einem Metall und/oder einer Legierung.

Eine vorteilhafte Ausführungsform ist dadurch gekennzeichnet, dass der Schaft ein Kraftübertragungsmittel für ein Halten des zweiten Gegenstandes aufweist. Bevorzugt umfasst das Kraftübertragungsmittel ein Gewinde. Besonders bevorzugt ist das Gewinde ein selbstformendes Gewinde.

Eine vorteilhafte Ausführungsform ist dadurch gekennzeichnet, dass das Widerlager eine Aussparung aufweist. Bevorzugt läuft die Aussparung um die Achse herum.

Eine vorteilhafte Ausführungsform ist dadurch gekennzeichnet, dass der Schaft ein erstes und ein zweites Ende aufweist, und wobei der Kopf an dem ersten Ende angeordnet ist. Alternativ oder zusätzlich weist das zweite Ende eine Spitze auf, welche bevorzugt als selbstbohrende Spitze ausgebildet ist.

Eine vorteilhafte Ausführungsform ist dadurch gekennzeichnet, dass die Formkante einen Krümmungsradius von mindestens 0,05 mm und/oder höchstens 2 mm aufweist. Bevorzugt beträgt der Krümmungsradius höchstens 0,5 mm, besonders bevorzugt höchstens 0,2 mm. Dadurch ist gewährleistet, dass die Formkante für ein Einformen auch in harte Materialien, beispielsweise ein Metall oder eine Legierung, geeignet ist.

Eine vorteilhafte Ausführungsform ist dadurch gekennzeichnet, dass die Formkante einen Ringdurchmesser von mindestens 5 mm und/oder höchstens 16 mm aufweist. Eine weitere vorteilhafte Ausführungsform ist dadurch gekennzeichnet, dass die Formkante eine axiale Höhe in Richtung der Achse von mindestens 0,05 mm und/oder höchstens 2 mm aufweist. Bevorzugt beträgt die axiale Höhe mindestens 0,2 mm. Eine weitere vorteilhafte Ausführungsform ist dadurch gekennzeichnet, dass das Widerlager einen Aussendurchmesser von mindestens 10,5 mm und/oder höchstens 16 mm aufweist.

Die Aufgabe ist ebenfalls gelöst bei einer Befestigungsanordnung mit einem ersten Gegenstand, einem zweiten Gegenstand und der Vorrichtung, wobei der erste Gegenstand zwischen dem Widerlager und dem Schaft eingeklemmt ist, und wobei die Formkante mittels der Klemmkraft eine Nut in den ersten Gegenstand formt. Bevorzugt furcht oder schneidet die Formkante die Nut in den ersten Gegenstand. Bevorzugt ist der erste Gegenstand zwischen dem Widerlager und dem Kraftübertragungsmittel eingeklemmt.

Bevorzugt ist der erste Gegenstand unmittelbar zwischen dem Widerlager und dem Schaft eingeklemmt. Ebenfalls bevorzugt ist der erste Gegenstand mittelbar über den zweiten Gegenstand zwischen dem Widerlager und dem Schaft eingeklemmt.

### Ausführungsbeispiele

Die Erfindung wird nachstehend anhand von Ausführungsbeispielen unter Bezugnahme auf die Zeichnungen näher erläutert. Es zeigen:
Fig. 1 eine Befestigungsvorrichtung in einer Seitenansicht,
Fig. 2 die Befestigungsvorrichtung aus Fig. 1 in einer Schrägansicht,
Fig. 3 die Befestigungsvorrichtung aus Fig. 1 in einer teilweisen Schnittansicht,
Fig. 4 die Befestigungsvorrichtung aus Fig. 1 in einer Axialansicht,
Fig. 5 eine Befestigungsvorrichtung in einer Axialansicht,
Fig. 6 eine Befestigungsvorrichtung in einer Schnittansicht,
Fig. 7 eine Befestigungsvorrichtung in einer Schnittansicht,
Fig. 8 eine Befestigungsvorrichtung in einer Schnittansicht,
Fig. 9 eine Befestigungsanordnung in einer Schnittansicht und
Fig. 10 die Befestigungsanordnung aus Fig. 9 nach einer mechanischen Belastung.

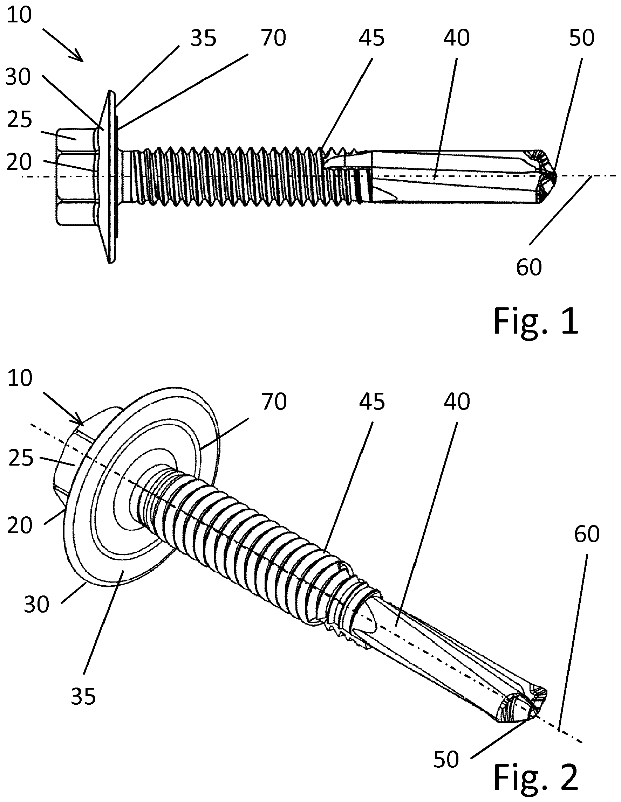

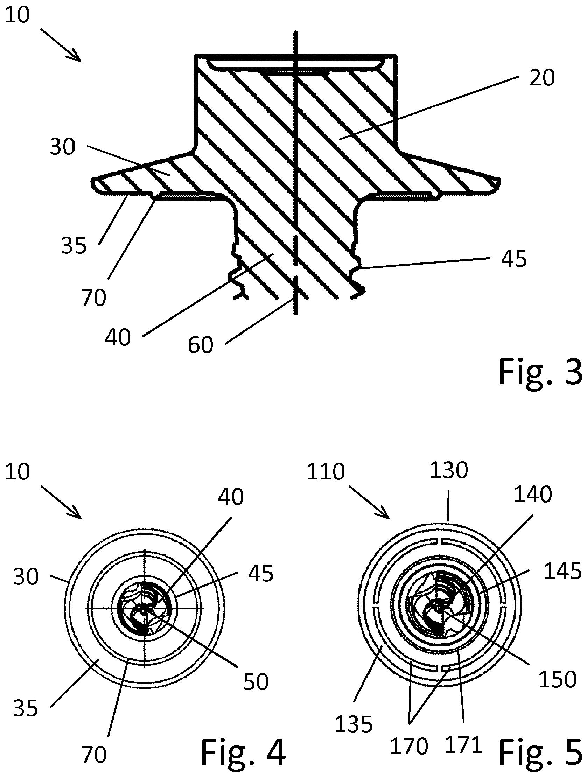

In den Fig. 1 bis 4 ist eine Vorrichtung 10 zur Befestigung eines nicht gezeigten ersten Gegenstandes an einem ebenfalls nicht gezeigten zweiten Gegenstand in einer Seitenansicht (Fig. 1), einer Schrägansicht (Fig. 2), einer teilweisen Schnittansicht (Fig. 3) sowie einer Axialansicht (Fig. 4) dargestellt. Die Vorrichtung 10 weist einen Kopf 20 mit einem als Aussensechskant ausgebildeten Antrieb 25 und einem Widerlager 30 für eine Abstützung des ersten Gegenstandes sowie einen länglichen Schaft 40 auf. Der Kopf 20 ist an einem ersten Ende des Schaftes 40 angeordnet, wobei der Schaft 40 an seinem zweiten Ende eine selbstbohrende Spitze 50 aufweist. Der Schaft 40 definiert in seiner Längsrichtung eine Achse 60, zu der eine vorzugsweise ebene Anlagefläche 35 des Widerlagers 30 für eine Anlage an den ersten Gegenstand senkrecht orientiert ist. Weiterhin weist der Schaft 40 ein als ein selbstformendes, insbesondere selbstfurchendes oder selbstschneidendes Gewinde ausgebildetes Kraftübertragungsmittel 45 zum Übertragen einer Haltekraft von der Vorrichtung 10 auf den nicht gezeigten zweiten Gegenstand auf. Bevorzugt ist die Vorrichtung 10 als selbstbohrendes Drehbefestigungselement ausgebildet. Der Kopf 20 mit dem in den Kopf integrierten Widerlager 30 und/oder der Schaft 40 umfasst ein Metall, insbesondere Aluminium, oder eine Legierung, insbesondere Edelstahl oder Stahl, bevorzugt mit einer Antikorrosionsbeschichtung, welche insbesondere Zink enthält.

Das Widerlager 30 weist eine Formkante 70 zum Einformen in den ersten Gegenstand auf. Das Widerlager 30 überragt den übrigen Kopf 20 senkrecht zur Achse 60 tellerförmig und ist als in den Kopf 20 integrierte Beilagscheibe ausgebildet. Die Formkante 70 ist in das Widerlager 30 und damit ebenfalls in den Kopf 20 integriert ausgebildet und ragt von der Anlagefläche 35 in Richtung der Achse 60 ab. Die Formkante 70 ist kreisringförmig ausgebildet und erstreckt sich um die Achse 60 herum. Wie in Fig. 3 zu sehen ist, ist die Formkante 70 radial etwa mittig innerhalb der Anlagefläche 35 angeordnet. Bei nicht gezeigten Ausführungsbeispielen ist die Formkante weiter innen oder weiter aussen, insbesondere an einem äusseren Rand der Anlagefläche angeordnet.

In Fig. 5 ist eine Vorrichtung 110 zur Befestigung eines nicht gezeigten ersten Gegenstandes an einem ebenfalls nicht gezeigten zweiten Gegenstand in einer Axialansicht dargestellt. Die Vorrichtung 110 weist einen Kopf mit einem Widerlager 130 für eine Abstützung des ersten Gegenstandes, einen Schaft 140 sowie eine selbstbohrende Spitze 150 auf. Das Widerlager 130 weist eine vorzugsweise ebene Anlagefläche 135 für eine Anlage an den ersten Gegenstand auf. Weiterhin weist der Schaft 140 ein als ein selbstformendes, insbesondere selbstfurchendes oder selbstschneidendes Gewinde ausgebildetes Kraftübertragungsmittel 145 zum Übertragen einer Haltekraft von der Vorrichtung 110 auf den nicht gezeigten zweiten Gegenstand auf. Das Widerlager 130 weist mehrere Formkanten 170, 171 zum Einformen in den ersten Gegenstand auf. Vier Formkanten 170 bilden einen unterbrochenen Ring um eine Achse der Vorrichtung 110. Eine radial innere Formkante 171 bildet dagegen einen geschlossenen Kreisring um die Achse herum.

Im Übrigen weist die Vorrichtung 110 bevorzugt die gleichen oder ähnliche Merkmale auf wie die Vorrichtung 10 aus den Fig. 1 bis 4.

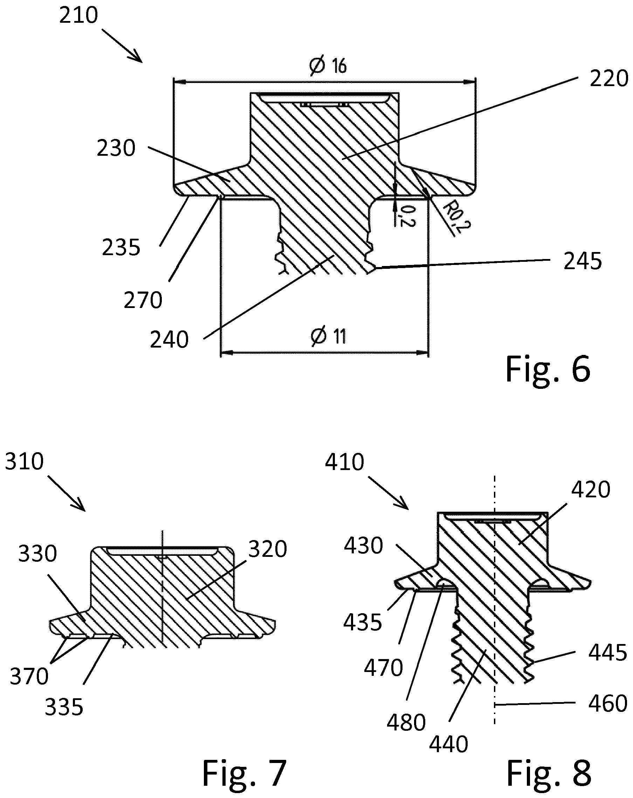

In Fig. 6 ist eine Vorrichtung 210 zur Befestigung eines nicht gezeigten ersten Gegenstandes an einem ebenfalls nicht gezeigten zweiten Gegenstand in einer teilweisen Schnittansicht dargestellt. Die Vorrichtung 210 weist einen Kopf 220 mit einem Widerlager 230 und einen Schaft 240 mit einem Kraftübertragungsmittel 245 auf. Das Widerlager 230 hat einen Aussendurchmesser von 16 mm und weist eine Anlagefläche 235 für eine Anlage an den ersten Gegenstand auf. Das Widerlager 230 weist eine Formkante 270 zum Einformen in den ersten Gegenstand auf. Die Formkante 270 ist kreisringförmig mit einem Ringdurchmesser von 11 mm ausgebildet, ragt um eine axiale Höhe von 0,2 mm von der Anlagefläche 235 ab und weist einen Krümmungsradius von 0,2 mm auf. Der Schaft 240 hat einen Durchmesser von 5,8 mm und eine Länge zwischen 34 mm und 36 mm.

Im Übrigen weist die Vorrichtung 210 bevorzugt die gleichen oder ähnliche Merkmale auf wie die Vorrichtung 10 aus den Fig. 1 bis 4 oder die Vorrichtung 110 aus Fig. 5.

In Fig. 7 ist eine Vorrichtung 310 zur Befestigung eines nicht gezeigten ersten Gegenstandes an einem ebenfalls nicht gezeigten zweiten Gegenstand in einer teilweisen Schnittansicht dargestellt. Die Vorrichtung 310 weist einen Kopf 320 mit einem Widerlager 330 auf. Das Widerlager 330 weist eine Anlagefläche 335 für eine Anlage an den ersten Gegenstand und zwei Formkanten 370 zum Einformen in den ersten Gegenstand auf. Die Formkanten 370 sind jeweils kreisringförmig und zueinander konzentrisch um eine Achse 360 der Vorrichtung 310 ausgebildet.

Im Übrigen weist die Vorrichtung 310 bevorzugt die gleichen oder ähnliche Merkmale auf wie die Vorrichtung 10 aus den Fig. 1 bis 4, die Vorrichtung 110 aus Fig. 5 oder die Vorrichtung 210 aus Fig. 6.

In Fig. 8 ist eine Vorrichtung 410 zur Befestigung eines nicht gezeigten ersten Gegenstandes an einem ebenfalls nicht gezeigten zweiten Gegenstand in einer teilweisen Schnittansicht dargestellt. Die Vorrichtung 410 weist einen Kopf 420 mit einem Widerlager 430 und einen eine Achse 460 definierenden Schaft 440 mit einem Kraftübertragungsmittel 445 auf. Das Widerlager 430 weist eine Anlagefläche 435 für eine Anlage an den ersten Gegenstand auf. Das Widerlager 430 weist eine die Achse 460 umlaufende Formkante 470 zum Einformen in den ersten Gegenstand und eine ebenfalls die Achse 460 umlaufende Aussparung 480 zur Aufnahme eines aufgeworfenen Materials des ersten Gegenstands auf.

Im Übrigen weist die Vorrichtung 410 bevorzugt die gleichen oder ähnliche Merkmale auf wie die Vorrichtung 10 aus den Fig. 1 bis 4, die Vorrichtung 110 aus Fig. 5, die Vorrichtung 210 aus Fig. 6 oder die Vorrichtung 310 aus Fig. 7.

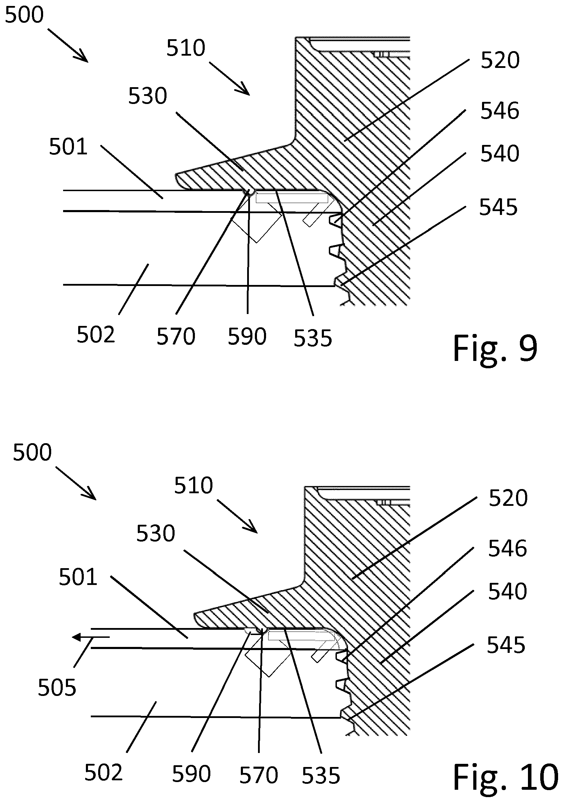

In Fig. 9 ist eine Befestigungsanordnung 500 mit einem ersten Gegenstand 501, einem zweiten Gegenstand 502 sowie einer Vorrichtung 510 zur Befestigung des ersten Gegenstands 501 an dem zweiten Gegenstand 502 in einer teilweisen Schnittansicht dargestellt. Der erste Gegenstand 501 weist dabei eine Dicke zwischen 0,5 mm und 3 mm, insbesondere eine Dicke von 1,5 mm auf. Der zweite Gegenstand 502 weist demgegenüber eine grössere Dicke auf, beispielsweise zwischen 3 mm und 15 mm, insbesondere eine Dicke von 6 mm. Bei nicht gezeigten Ausführungsbeispielen weist die Befestigungsanordnung zwei, drei, vier oder mehr übereinander gestapelte erste Gegenstände, beispielsweise Platten, auf, welche als Stapel an einem zweiten Gegenstand befestigt werden. Die Formkante formt dann nur in den obersten ersten Gegenstand des Stapels eine Nut ein.

Die Vorrichtung 510 weist einen Kopf 520 mit einem als Aussensechskant ausgebildeten Antrieb und einem Widerlager 530 für eine Abstützung des ersten Gegenstandes 501 gegen den zweiten Gegenstand 502 sowie einen länglichen Schaft 540 auf. Der Kopf 520 ist an einem ersten Ende des Schaftes 540 angeordnet, wobei der Schaft 540 an seinem zweiten Ende eine nicht gezeigte selbstbohrende Spitze aufweist. Weiterhin weist der Schaft 540 ein als ein selbstformendes Gewinde ausgebildetes Kraftübertragungsmittel 545 zum Übertragen einer Haltekraft von der Vorrichtung 510 auf den zweiten Gegenstand 502 auf. Das Widerlager 530 überragt den übrigen Kopf 520 tellerförmig und ist als in den Kopf 520 integrierte Beilagscheibe ausgebildet. Das Widerlager 530 weist eine vorzugsweise ebene Anlagefläche 535 sowie eine Formkante 570 zum Einformen in den ersten Gegenstand 501 auf. Die Formkante 570 ist kreisringförmig ausgebildet.

Zur Befestigung des ersten Gegenstands 501 an dem zweiten Gegenstand 502 wird die Vorrichtung 510 mit der nicht gezeigten selbstbohrenden Spitze auf den ersten Gegenstand 501 gedrückt und mittels des Antriebs drehend angetrieben. Die selbstbohrende Spitze erzeugt dadurch eine sich durch den ersten Gegenstand 501 und den zweiten Gegenstand 502 erstreckende Bohrung. Das Kraftübertragungsmittel 545 erzeugt dabei in dem zweiten Gegenstand 502 und unter Umständen in dem ersten Gegenstand 501 eine Gegenkontur 546, in welcher das Kraftübertragungsmittel 545 und damit die Vorrichtung 510 gehalten ist.

Das Kraftübertragungsmittel 545 ist von der Anlagefläche 535 in axialer Richtung so weit beabstandet, dass der erste Gegenstand 501 in dem befestigten Zustand gemäss Fig. 9 zwischen der Anlagefläche 535 und dem zweiten Gegenstand 502 und daher mittelbar über den zweiten Gegenstand 502 zwischen dem Widerlager 530 und dem Schaft 540 eingeklemmt ist. Während sich die Anlagefläche 535 an den ersten Gegenstand 501 anlegt, formt, insbesondere furcht, die Formkante 570 eine Nut 590 in den ersten Gegenstand 501. Bei einem nicht gezeigten Ausführungsbeispiel ist der erste Gegenstand unmittelbar zwischen dem Widerlager und dem Schaft beziehungsweise dem Kraftübertragungsmittel eingeklemmt.

In Fig. 10 ist die Befestigungsanordnung 500 gemäss Fig. 9 dargestellt, während oder nachdem eine Kraft 505 auf den ersten Gegenstand 501 wirkt. Die Kraft 505 bewirkt eine Verschiebung des ersten Gegenstands 501 relativ zum zweiten Gegenstand 502 in Richtung der Kraft, das heisst in Fig. 10 nach links. In der Richtung der Kraft 505 bildet die Formkante 570 mit der Nut 590 einen Formschluss, welcher der Kraft 505 entgegenwirkt und die Verschiebung des ersten Gegenstands 501 relativ zur Vorrichtung 510 und damit zum zweiten Gegenstand 502 erschwert. Sobald die Kraft 505 vorliegt, verkeilt sich die Formkante 570 in der Nut 590, was die Verschiebung des ersten Gegenstands 501 relativ zum zweiten Gegenstand 502 zusätzlich erschwert. Wie in Fig. 10 zu sehen ist, hat eine gegebenenfalls verbleibende reduzierte Verschiebung des ersten Gegenstands 501 relativ zur Formkante 570 eine Verbreiterung der Nut 590 zur Folge.

Die Erfindung wurde anhand von Beispielen einer Vorrichtung zur Befestigung eines ersten Gegenstandes an einem zweiten Gegenstand beschrieben. Bei dem ersten Gegenstand handelt es sich dabei bevorzugt um einen plattenförmigen Gegenstand wie beispielsweise ein Metallblech. Bei dem zweiten Gegenstand handelt es sich dabei bevorzugt ebenfalls um einen plattenförmigen Gegenstand wie beispielsweise ein Metallblech oder aber um einen massiven Gegenstand mit einer Dicke, welche über die Länge des Schaftes der Vorrichtung hinausgeht.

Die Merkmale der beschriebenen Ausführungsformen sind beliebig miteinander innerhalb einer einzigen Befestigungsvorrichtung kombinierbar. Es wird darauf hingewiesen, dass die erfindungsgemässe Vorrichtung auch für andere Zwecke geeignet ist.

## Patentansprüche

1. Vorrichtung zur Befestigung eines ersten Gegenstandes an einem zweiten Gegenstand, mit einem Kopf, wobei der Kopf ein Widerlager für eine Abstützung des ersten Gegenstandes aufweist, einem insbesondere länglichen Schaft, wobei der Schaft, insbesondere in seiner Längsrichtung, eine Achse definiert, und wobei das Widerlager eine Formkante zum Einformen in den ersten Gegenstand aufweist.

2. Vorrichtung nach Anspruch 1, wobei das Widerlager den übrigen Kopf senkrecht zur Achse insbesondere tellerförmig überragt.

3. Vorrichtung nach einem der vorhergehenden Ansprüche, wobei das Widerlager eine senkrecht zur Achse angeordnete Anlagefläche für eine Anlage an den ersten Gegenstand aufweist, von welcher die Formkante in Richtung der Achse abragt.

4. Vorrichtung nach einem der vorhergehenden Ansprüche, wobei sich die Formkante um die Achse herum erstreckt.

5. Vorrichtung nach einem der vorhergehenden Ansprüche, wobei die Formkante ringförmig, insbesondere kreisringförmig, um die Achse ausgebildet ist.

6. Vorrichtung nach einem der vorhergehenden Ansprüche, wobei das Widerlager mehrere Formkanten, insbesondere zwei, drei, vier oder fünf Formkanten aufweist, welche insbesondere einen unterbrochenen Ring um die Achse bilden.

7. Vorrichtung nach einem der vorhergehenden Ansprüche, wobei die Formkante ein Metall und/oder eine Legierung umfasst, insbesondere aus einem Metall und/oder einer Legierung besteht.

8. Vorrichtung nach einem der vorhergehenden Ansprüche, wobei der Schaft ein Kraftübertragungsmittel für ein Halten des zweiten Gegenstandes aufweist.

9. Vorrichtung nach Anspruch 8, wobei das Kraftübertragungsmittel ein insbesondere selbstformendes Gewinde umfasst.

10. Vorrichtung nach einem der vorhergehenden Ansprüche, wobei das Widerlager eine insbesondere um die Achse umlaufende Aussparung aufweist.

11. Vorrichtung nach einem der vorhergehenden Ansprüche, wobei der Schaft ein erstes und ein zweites Ende aufweist, und wobei der Kopf an dem ersten Ende angeordnet ist und/oder das zweite Ende eine insbesondere selbstbohrende Spitze aufweist.

12. Befestigungsanordnung mit einem ersten Gegenstand, einem zweiten Gegenstand und einer Vorrichtung nach einem der vorhergehenden Ansprüche, wobei der erste Gegenstand zwischen dem Widerlager und dem Schaft eingeklemmt ist, und wobei die Formkante mittels der Klemmkraft eine Nut in den ersten Gegenstand formt, insbesondere furcht oder schneidet.

13. Befestigungseinrichtung nach Anspruch 12, wobei der erste Gegenstand zwischen dem Widerlager und dem Kraftübertragungsmittel eingeklemmt ist.

14. Befestigungseinrichtung nach einem der Ansprüche 12 bis 13, wobei der erste Gegenstand unmittelbar zwischen dem Widerlager und dem Schaft eingeklemmt ist.

15. Befestigungseinrichtung nach einem Ansprüche 12 bis 13, wobei der erste Gegenstand mittelbar über den zweiten Gegenstand zwischen dem Widerlager und dem Schaft eingeklemmt ist.
